# EUROPÄISCHE PATENTSCHRIFT

(11) **EP 4 038 239 B1**
(45) Veröffentlichungstag und Bekanntmachung des Hinweises auf die Patenterteilung: **03.12.2025**
(21) Anmeldenummer: 20786510.6
(22) Anmeldetag: 01.10.2020
(51) Int. Cl.: E01F 8/00, E04B 1/86

(54) **SCHALLABSORBER**
SOUND ABSORBER
AMORTISSEUR SONORE

(30) Priorität: 01.10.2019 AT 508332019
(43) Veröffentlichungstag der Anmeldung: 10.08.2022
(73) Patentinhaber: Sealed Air Verpackungen GmbH, 36304 Alsfed (DE)
(72) Erfinder: DIRNBERGER, Ralf, 5110 Oberndorf bei Salzburg (AT)
(74) Vertreter: Uexküll & Stolberg
(86) Internationale Anmeldenummer: PCT/EP2020/077574
(87) Internationale Veröffentlichungsnummer: WO 2021/064129

(56) Entgegenhaltungen:
- WO-A1-2012/156416
- WO-A1-2013/010217
- WO-A1-2019/177694
- WO-A1-99/49134
- DE-U1- 7 824 873
- JP-A- 2009 264 102

## Beschreibung

Die Erfindung betrifft gemäß dem Oberbegriff des Patentanspruches 1 eine Verkehrswegelärmschutzwand mit wenigstens einem Schallabsorber.

Es sind Schallabsorber für die Verwendung im Freien bekannt. Diese werden meist entlang von Verkehrswegen, wie etwa viel befahrenen Straßen und/oder Eisenbahngleisen, angeordnet, um die Lärmbelastung der Umgebung zu reduzieren.

Im Gegensatz zu Schallabsorbern für die Anordnung in Innenräumen müssen derartige Schallabsorber für den Außeneinsatz eine gewisse Wetterfestigkeit aufweisen. Diese müssen unempfindlich gegen Nässe und Schmutz sein. Weiters sollen diese einen Lärmschutz bzw. eine Lärmverminderung über einen langen Zeitraum gewährleisten. Aufgrund dieser Anforderung kommen viele Konzepte aus dem Innenraumbereich für die Nutzung im Freien nicht in Frage, da diese meist Hohlräume aufweisen, die im Freien sehr schnell und je nach Größe von Vögeln oder Insekten besiedelt oder schlicht durch Laub oder andere Gegenstände verstopft werden, und dadurch jedoch ihre Wirksamkeit verlieren. Weiters können sich Witterungseinflüsse, wie Regen, Schnee und Eis negativ auf die Wirkung derartiger Konzepte auswirken.

Es sind Kunststoffschaumplatten bekannt, welche eine gute Widerstandsfähigkeit gegen Witterungseinflüsse aufweisen, und auch bei exponierter Anordnung im Freien über einen ausreichend langen Zeitraum chemisch stabil bleiben. Diese Kunststoffschaumplatten weisen eine im Wesentlichen geschlossene Oberfläche auf, wodurch diese keine Verstecks- bzw. Nistmöglichkeiten für Vögel oder Insekten bieten. Auch sind diese unempfindlich gegen Eis und Erosion. Nachteilig an derartigen Kunststoffschaumplatten ist deren relativ geringes Schallabsorptionsvermögen.

WO 2012/156416 A1 beschreibt einen Schallabsorber, wobei in einer Kunststoffschaumplatte Schallabsorberausnehmungen gebildet sind. Die Schallabsorberausnehmungen sind durch Perforation als Löcher in der Kunststoffschaumplatte gebildet, die kreisförmige, elliptische oder polygonale Querschnitte haben und insofern Löcher darstellen.

WO 2013/010217 A1 beschreibt ein schalldämpfendes Paneel, das für eine Verkehrswegelärmschutzwand gemäß Oberbegriff von Patentanspruch 1 verwendet werden kann. Das Paneel hat einen Schallabsorber, der aus einer inneren Platte aus Polystyrolschaum und auf die innere Platte auf deren gegenüberliegenden Seiten aufgeklebte Platten aus MgO-Zement gebildet ist. Die innere Polystyrolschaumplatte ist an ihren durch die aufgeklebten Platten bedeckten Oberflächen mit Ausnehmungen in Form von Nuten versehen, die über einen Teil der Dicke der Polystyrolschaumplatte in diese hineinreichen.

Aufgabe der Erfindung ist es daher eine Verkehrswegelärmschutzwand der eingangs genannten Art mit Schallabsorbern anzugeben, mit welchen die genannten Nachteile vermieden werden können und welche witterungsbeständig sind und ein hohes Schallabsorptionsvermögen aufweisen, wobei das Schallabsorptionsvermögen einfach an unterschiedliche Anforderungen anpassbar ist und wobei die Schallabsorberausnehmungen einfach in Kunststoffschaumplatten herstellbar sein sollen.

Erfindungsgemäß wird dies durch die Verkehrswegelärmschutzwand mit den Merkmalen des Patentanspruches 1 erreicht. Die Verkehrswegelärmschutzwand ist zum Aufstellen an einem Verkehrsweg im Freien, insbesondere zur Anordnung an einer Straße, einem Eisenbahngleis und/oder einer Start/Landebahn, ausgestaltet. Die Verkehrswegelärmschutzwand umfasst wenigstens ein Paneel, das wenigstens einen Schallabsorber aufweist, der wenigstens eine Kunststoffschaumplatte umfasst, wobei eine erste Oberfläche der Kunststoffschaumplatte Schallabsorberausnehmungen zur Vorgabe eines Absorptionsverhaltens mit vorgebbarem Frequenzgang aufweist. Die Schallabsorberausnehmungen erstrecken sich jeweils lediglich über einen Teil einer Dicke der Kunststoffschaumplatte, wobei eine vorgebbare Mehrzahl, insbesondere sämtliche, der Schallabsorberausnehmungenjeweils in Form einer Nut ausgebildet sind. Erfindungsgemäß ist vorgesehen, dass die erste Oberfläche der Kunststoffplatte mit den davon ausgehenden Schallabsorberausnehmungen eine Oberfläche des Schallabsorbers bildet, so dass die Verkehrswegelärmschutzwand mit der ersten Oberfläche dem Verkehrsweg zugewandt aufstellbar ist.

Dadurch kann eine Verkehrswegelärmschutzwand mit witterungsbeständigen Schallabsorbern geschaffen werden, welche durch die Schallabsorberausnehmungen bzw. Öffnungen in dessen Oberfläche ein hohes Schallabsorptionsvermögen aufweisen. Dabei hat sich gezeigt, dass die Anzahl sowie die konkreten Abmessungen und Formgebungen der Schallabsorberausnehmungen sowohl das Maß des Schallabsorptionsvermögens bestimmen als auch die Frequenzverteilung bzw. den Frequenzgang des Schallabsorptionsvermögens. Durch Vorgabe bzw. Veränderung der Schallabsorberausnehmungen kann daher das Schallabsorptionsvermögen einfach an unterschiedliche Anforderungen angepasst werden.

Die Unteransprüche betreffen weitere vorteilhafte Ausgestaltungen der Erfindung.

Ausdrücklich wird hiermit auf den Wortlaut der Patentansprüche Bezug genommen, wodurch die Patentansprüche an dieser Stelle durch Bezugnahme in die Beschreibung eingefügt sind und als wörtlich wiedergegeben gelten.

Die Erfindung wird unter Bezugnahme auf die beigeschlossenen Zeichnungen, in welchen lediglich bevorzugte Ausführungsformen beispielhaft dargestellt sind, näher beschrieben. Dabei zeigt:
Fig. 1 ein Paneel für eine Verkehrswegelärmschutzwand mit einer ersten Ausführungsform eines gegenständlichen Schallabsorbers im Aufriss;
Fig. 2 eine zweite Ausführungsform eines gegenständlichen Schallabsorbers für die Verkehrswegelärmschutzwand im Querschnitt.

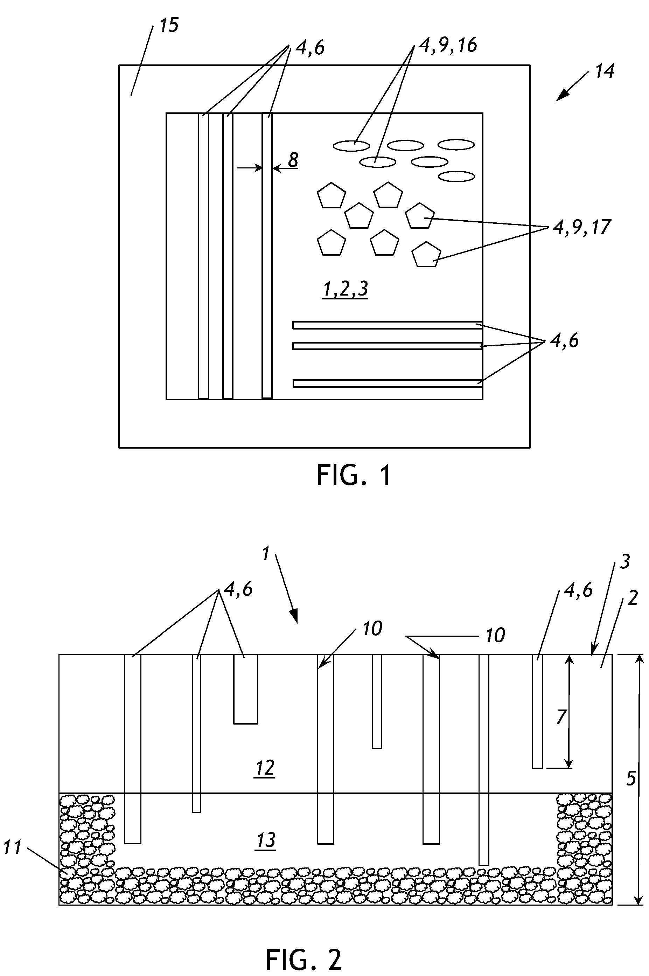

Die Fig. 1 und 2 zeigen jeweils einen Schallabsorber 1 für eine Verkehrswegelärmschutzwand, wobei der Schallabsorber 1 wenigstens eine Kunststoffschaumplatte 2 umfasst, wobei eine erste Oberfläche 3 der Kunststoffschaumplatte 2 eine vorgebbare Mehrzahl Schallabsorberausnehmungen 4 zur Vorgabe eines Absorptionsverhaltens mit vorgebbarem Frequenzgang aufweist, welche Schallabsorberausnehmungen 4 sich jeweils lediglich über einen Teil einer Dicke 5 der Kunststoffschaumplatte 2 erstrecken.

Dadurch kann ein witterungsbeständiger Schallabsorber 1 geschaffen werden, welcher durch die Schallabsorberausnehmungen 4 bzw. Öffnungen in dessen Oberfläche 3 ein hohes Schallabsorptionsvermögen aufweist. Dabei hat sich gezeigt, dass die Anzahl sowie die konkreten Abmessungen und Formgebungen der Schallabsorberausnehmungen 4 sowohl das Maß des Schallabsorptionsvermögens bestimmen, als auch die Frequenzverteilung bzw. den Frequenzgang des Schallabsorptionsvermögens. Durch Vorgabe bzw. Veränderung der Schallabsorberausnehmungen 4 kann daher das Schallabsorptionsvermögen einfach an unterschiedliche Anforderungen angepasst werden.

Gegenständliche Schallabsorber 1 sind für die Verwendung in einer Verkehrswegelärmschutzwand vorgesehen. Bei dem Verkehrsweg kann es sich um jede Art eines Verkehrsweges handeln, insbesondere um einen Verkehrsweg, auf welchem Motorfahrzeuge betrieben werden. Bei dem Verkehrsweg handelt es sich um eine Straße, Eisenbahngleise, eine Start/Landebahn, einen Fluss oder Kanal usw. Weiters kann der Einsatz bei allen anderen Lärmquellen im Freien vorgesehen sein, etwa bei einem Freiluftkonzert, einem Schießstand oder einem Raketenstartplatz.

Der gegenständliche Schallabsorber 1 ist bevorzugt Teil eines Paneels 14, und als solcher von einem Rahmen 15 umschlossen. Weiters weist das Paneel 14 bevorzugt eine Rückwand auf. Es kann jedoch auch ein Einsatz bzw. eine Verwendung des Schallabsorbers 1 für sich allein, daher ohne jede weitere Stützkonstruktion vorgesehen sein.

Der Schallabsorber 1 umfasst wenigstens eine Kunststoffschaumplatte 2. Bei dem Kunststoffschaum kann es sich an sich um jede Art eines Kunststoffschaumes handeln. Als besonders bevorzugt haben sich Polyethylenschaumplatten erwiesen. Allerdings können auch Kunststoffschaumplatten umfassend Polypropylen vorgesehen sein.

Die Kunststoffschaumplatte 2 weist Poren 11 auf. Es kann vorgesehen sein, dass diese Poren 11 in der Mehrzahl offenzellig und/oder geschlossenzellig sind. Insbesondere ist vorgesehen, dass eine Mehrzahl der Poren 11 geschlossen ist. Dadurch weist die Kunststoffschaumplatte 2 eine bessere Formstabilität und Witterungsbeständigkeit auf, als entsprechende Kunststoffschaumplatten 2 mit offenen Zellen bzw. Poren. Es hat sich als vorteilhaft erwiesen, wenn die Poren 11 eine mittlere Porengröße größer 2 mm aufweisen.

In Fig. 2 sind einige dieser Poren 11 schematisch dargestellt, wobei aus Gründen der darstellerischen Übersichtlichkeit darauf verzichtet wurde, die Poren 11 über den gesamten Querschnitt darzustellen.

Weiters haben sich Kunststoffschaumplatten 2 mit einer Härte zwischen 15 und 70 Shore A als besonders geeignet erwiesen. Eine zu geringe Härte geht meist mit einer geringen Formstabilität einher, wohingegen eine zu hohe Härte die innere Dämpfung des Werkstoffes verringert.

Weiters ist bevorzugt vorgesehen, dass die Kunststoffschaumplatte 2 eine Dichte zwischen 15 und 50 kg/m³ aufweist.

Die Kunststoffschaumplatte 2 weist eine erste Oberfläche 3 auf, welche dazu vorgesehen ist, im Betrieb der Schall- bzw. Lärmquelle zugewandt zu sein. Die erste Oberfläche 3 ist, bezogen auf die Poren 11, besonders bevorzugt geschlossen, und weist daher an der Oberfläche 3 selbst keine, bzw. nur eine geringe Anzahl an offenen Poren auf. Selbstverständlich wird die erste Oberfläche 3 durch die Schallabsorberausnehmungen 4 geöffnet.

Es ist vorgesehen, dass die erste Oberfläche 3 eine vorgebbare Mehrzahl von Schallabsorberausnehmungen 4 zur Vorgabe eines Absorptionsverhaltens und Reflexionsverhaltens mit vorgebbarem Frequenzgang aufweist. Bei den betreffenden Verhalten handelt es sich um das Absorptionsverhalten bzw. Reflexionsverhalten für Luftschall. Das Absorptionsverhalten kann auch als Schallabsorptionsverhalten bezeichnet werden. Weiters bezieht sich die Vorgabe des Absorptionsverhaltens bzw. des Reflexionsverhaltens auf das entsprechende Verhalten des gesamten Schallabsorberelements 1, und nicht auf die Vorgabe des Absorptionsverhaltens bzw. Reflexionsverhaltens einer einzigen Schallabsorberausnehmung 4. Es hat sich gezeigt, dass durch Form, Tiefe 7, Anzahl und konkrete Anordnung der Schallabsorberausnehmungen 4 das Absorptionsverhalten bzw. Reflexionsverhaltens des gesamten Schallabsorbers 1 bestimmt werden kann.

Dabei ist das Maß der Absorption stets bei bestimmten Frequenzen zu betrachten, da dies naturgemäß nicht über den gesamten relevanten bzw. durch den Menschen wahrnehmbaren Frequenzbereich hinweg konstant ist bzw. sein kann. Als Frequenzgang bzw. ein Frequenzverhalten wird daher ein Maß der Absorption über der Frequenz verstanden. An sich ist der Begriff Frequenzgang für den Fachmann eindeutig zu verstehen.

Es ist wesentlich, dass sich die Schallabsorberausnehmungen 4 jeweils lediglich über einen Teil einer Dicke 5 der Kunststoffschaumplatte 2 erstrecken. Deren Tiefe 7 ist daher geringer als die Dicke 5 der gesamten Kunststoffschaumplatte 2. Dadurch kann erreicht werden, dass keinesfalls eine Schalldurchgangsöffnung besteht. Auch in dem Fall, dass hinter der Kunststoffschaumplatte 2 eine Abschlussplatte, etwa eine Holz- oder Metallplatte angeordnet sein sollte, wird dadurch die Schalldämmung verbessert, da sichergestellt ist, dass der Schall nicht direkt auf eine schallharte Oberfläche trifft.

Neben dem Umstand, dass die Schallabsorberausnehmungen 4 die Kunststoffschaumplatte 2 nicht vollständig durchdringen, ist weiters auch eine Mindesttiefe relevant um die erwünschte Wirkung zu erzielen. Diesbezüglich hat es sich als vorteilhaft erwiesen, wenn die Schallabsorberausnehmungen 4 eine Tiefe 7 von wenigsten 30%, insbesondere wenigstens 50%, der Dicke 5 der Kunststoffschaumplatte 2 aufweisen.

Auf die Poren 11 der Kunststoffschaumplatte 2 wurde bereits eingegangen. Bevorzugt ist vorgesehen, dass durch jede der Schallabsorberausnehmungen 4 jeweils eine Mehrzahl an Poren 11 geöffnet und mit der ersten Oberfläche 3 verbunden sind. Dadurch kann der zu verringernde Schall in die innere Struktur der Kunststoffschaumplatte 2 eindringen, und dort an den unterschiedlichen Strukturen gebrochen, reflektiert und somit gedämpft werden.

Die Schallabsorberausnehmungen 4 können unterschiedliche Formen und Abmessungen aufweisen. Dabei können auch an ein und derselben Kunststoffschaumplatte 2 unterschiedlich ausgebildete Schallabsorberausnehmungen 4 aufscheinen.

Besonders bevorzugt kann vorgesehen sein, dass die Schallabsorberausnehmungen 4 hinterschneidungsfrei ausgebildet sind. Hinterschneidungsfrei bedeutet in diesem Zusammenhang, dass die Schallabsorberausnehmungen 4 frei von Hinterschneidungen sind. Eine Breite 8 der Schallabsorberausnehmungen 4 ist daher bevorzugt mit zunehmender Tiefe 7 gleichbleibend oder enger werdend. Eine Verbreiterung der einzelnen Schallabsorberausnehmung 4 zunehmender Tiefe 7 erfolgt nicht. Die Schallabsorberausnehmungen 4 sind daher insbesondere keine Helmholzresonatoren. Dies hat insbesondere hinsichtlich der Herstellung Vorteile, da die Schallabsorberausnehmungen 4, etwa mittels einer Säge- oder Bohr- bzw. Schmelzanordnung, einfach in die Kunststoffschaumplatte eingebracht werden können.

Gemäß der Erfindung ist eine vorgebbare Mehrzahl, insbesondere sämtliche, der Schallabsorberausnehmungen 4 jeweils in Form einer Nut 6 mit vorgebbarer Tiefe 7 ausgebildet. Dies hat insbesondere hinsichtlich der Herstellung Vorteile, da eine solche Nut 6, etwa mittels einer Sägeanordnung, einfach geschnitten werden kann. Dabei ist vorgesehen, dass die Nut 6 jedenfalls eine endliche Breite aufweist und im Gegensatz zu einem bloßen Einschnitt mit einer Klinge auch tatsächlich zwei Seitenwände 10 aufweist, welche zueinander beabstandet sind. Besonders bevorzugt ist vorgesehen, dass die Nut 6 eine Breite 8 von wenigstens 1 mm, insbesondere wenigstens 2 mm, vorzugsweise wenigstens 3 mm, aufweist. Es hat sich gezeigt, dass schmälere Nuten 6 nur eine sehr geringe Wirkung haben. Dabei kann in diesem Zusammenhang bevorzugt vorgesehen sein, dass die Breite der Nuten 6 nicht größer als 20 mm ist.

Die Nuten 6 können sich über eine gesamte Länge bzw. Breite einer Kunststoffschaumplatte 2 erstrecken oder nur über einen Teil. Beide Varianten sind in Fig. 1 dargestellt. Die Nuten 6 können auch kurvenförmig angeordnet sein.

Neben den erfindungsgemäß vorgesehenen Schallabsorberausnehmungen in Form von Nuten 6 kann eine Anzahlvon Schallabsorberausnehmungen 4 jeweils in Form eines Sacklochs 9 mit vorgebbarer Tiefe 7 ausgebildet sein. Diese Sacklöcher 9 können dabei einen beliebigen Grundriss aufweisen, wie etwa in Fig. 1 gezeigt, in welcher elliptische Sacklöcher 9, 16 sowie fünfeckige Sacklöcher 9, 17 dargestellt sind. Die Sacklöcher 9 können rund, insbesondere kreisrund, ausgebildet sein. Der Begriff rund umfasst dabei auch sog. Gleichdicke.

Die Sacklöcher 9 können eine endliche Breite bzw. einen entsprechenden Durchmesser aufweisen, und sind im Gegensatz zu einem bloßen Einstich mit einer Nadel auch tatsächlich als eine Öffnung mit Seitenwänden 10 ausgebildet, welche zueinander beabstandet sind. Z.B. weisen die Sacklöcher 9 eine Fläche von wenigstens 0,7 mm², insbesondere wenigstens 2 mm², auf. Der Bezug auf die Fläche ermöglicht eine genaue Bestimmung der Größe ungeachtet der Form.

Die Schallabsorberausnehmungen 4 weisen Seitenwände 10 auf.

Bevorzugt ist vorgesehen, dass die Seitenwände 10, insbesondere über die gesamte Tiefe 7, im Wesentlichen normal auf die erste Oberfläche 3 angeordnet sind. Als im Wesentlichen normal werden die Seitenwände 10 angesehen, wenn diese nicht mehr als 8° von der Normalen abweichen. Zusätzlich bzw. alternativ dazu ist bevorzugt vorgesehen, dass die Seitenwände 10 im Wesentlichen parallel sind.

Weiters kann vorgesehen sein, dass die Seitenwände 10 V-förmig angeordnet sind und sich, insbesondere über die gesamte Tiefe 7, zur Oberfläche 3 hin verbreitern.

Bevorzugt kann vorgesehen sein, dass die Nuten 6 einen rechteckigen Querschnitt aufweisen. Der Querschnitt kann dabei insbesondere parallel zur Oberfläche 3 und/oder normal zu der Oberfläche 3 betrachtet rechteckig sein.

Weiters können die Nuten 6 auch Querschnitte aufweisen, welche von Rechtecken abweichen, und welche etwa mittels Fräsern hergestellt werden können. Dabei können etwa bauchige oder abgerundete Querschnitte vorgesehen sein.

Wie bereits dargelegt, ist es besonders bevorzugt vorgesehen, dass unterschiedlich ausgebildete Schallabsorberausnehmungen 4 Teil ein und desselben Schallabsorbers 1 sind. Durch die Kombination unterschiedlicher Schallabsorberausnehmungen 4 kann ein ganz bestimmtes bzw. gezieltes Absorptionsverhalten eingestellt werden. Dies wird in der Regel durch eine Versuchsreihe erfolgen bzw. durch Computersimulationen.

Neben der Breite bzw. Form und Fläche der Schallabsorberausnehmungen 4 ist vor allem vorgesehen, die Tiefe 7 der Schallabsorberausnehmungen 4 zu variieren. Dabei hat es sich sowohl hinsichtlich der akustischen Wirkung als auch einer einfachen Herstellung als vorteilhaft erwiesen, wenn eine erste Gruppe von Schallabsorberausnehmungen 4 eine erste Tiefe 7 aufweist, wenn eine zweite erste Gruppe von Schallabsorberausnehmungen 4 eine zweite Tiefe 7 aufweist, und wenn die erste Tiefe 7 unterschiedlich zur zweiten Tiefe 7 ist. Fig. 2 zeigt Nuten 6 unterschiedlicher Tiefe 7.

Hinsichtlich einer besonders einfachen Herstellung, ist es besonders vorteilhaft, dass entlang eines vorgebbaren Querschnitts durch die Kunststoffschaumplatte 2 abwechselnd Schallabsorberausnehmungen 4 der ersten Gruppe und der zweiten Gruppe angeordnet sind.

Weiters hat es sich - neben der Tiefe 7 - als besonders vorteilhaft erwiesen die Abstände zwischen den Schallabsorberausnehmungen 4 zu variieren. Es ist daher weiters bevorzugt vorgesehen, dass eine dritte Gruppe von Schallabsorberausnehmungen 4 in einem ersten Abstand zueinander angeordnet sind, dass eine vierte Gruppe von Schallabsorberausnehmungen 4 in einem zweiten Abstand zueinander angeordnet sind, und dass der erste Abstand unterschiedlich zum zweiten Abstand ist.

Fig. 2 zeigt eine Kunststoffschaumplatte 2, welche als Verbundplatte umfassend zwei individuelle Kunststoffschaumteilplatten 12, 13 ausgebildet ist, wobei sich die Schallabsorberausnehmungen 4 über wenigstens zwei der Kunststoffschaumteilplatten 12, 13 erstrecken. Dadurch können unterschiedliche akustische Eigenschaften unterschiedlicher Kunststoffschäume kombiniert werden.

Selbstverständlich können dabei auch mehr als zwei Kunststoffschaumteilplatten zu einer Verbundplatte zusammengefügt, insbesondere verklebt, werden.

Insbesondere hat es sich als sehr wirkungsvoll erwiesen, wenn sich die beiden Kunststoffschaumteilplatten 12, 13 hinsichtlich deren Porengröße der Poren 11 unterscheiden. Es ist daher weiters bevorzugt vorgesehen, dass die erste Kunststoffschaumteilplatte 12 eine erste Porengröße aufweist, dass die zweite Kunststoffschaumteilplatten 13 eine zweite Porengröße aufweist, und dass die erste Porengröße unterschiedlich zur zweiten Porengröße ist.

Da auch die Art des verwendeten und geschäumten Kunststoffes erheblichen Einfluss, insbesondere auf die innere Dämpfung der Kunststoffschaumteilplatten 2 hat, kann vorgesehen sein, dass eine dritte Kunststoffschaumteilplatte aus einem ersten Kunststoff gebildet ist, dass eine vierte Kunststoffschaumteilplatte aus einem zweiten Kunststoff gebildet ist, und dass der erste Kunststoff unterschiedlich zum zweiten Kunststoff ist.

Im Rahmen der gegenständlichen Offenbarung werden Merkmale üblicherweise mit einem unbestimmten Artikel "ein, eine, eines, einer" eingeführt. Sofern es sich aus dem Kontext nicht anders ergibt, ist dieser unbestimmte Artikel nicht als Zahlenangabe zu verstehen, sodass die Offenbarung nicht auf lediglich ein Vorkommen des jeweiligen Merkmals beschränkt ist.

Weiters ist ein "oder" als inklusiv und nicht als exklusiv zu interpretieren. Bei zwei generischen Begriffen "A" bzw. "B" schließt daher "A oder B" die Möglichkeit "A und B" nicht aus, es sei denn, es ergibt sich aus dem Kontext oder der gegenständlichen Beschreibung, dass lediglich einer der beiden generischen Begriffe "A" und "B" vorgesehen ist.

Weiters folgt aus der Verwendung eines ordnenden Zahlwortes, wie etwa erster, zweiter, dritter usw., welches einem Merkmal vorgestellt ist, nicht zwingend, dass es eine Gruppe des betreffenden Merkmals gibt.

## Patentansprüche

1. Verkehrswegelärmschutzwand zum Aufstellen an einem Verkehrsweg im Freien, insbesondere zur Anordnung an einer Straße, einem Eisenbahngleis und/oder einer Start/Landebahn, wobei die Verkehrswegelärmschutzwand wenigstens ein Paneel (14) umfasst, wobei das Paneel wenigstens einen Schallabsorber (1) aufweist, der wenigstens eine Kunststoffschaumplatte (2) umfasst, wobei eine erste Oberfläche (3) der Kunststoffschaumplatte (2) Schallabsorberausnehmungen (4) zur Vorgabe eines Absorptionsverhaltens mit vorgebbarem Frequenzgang aufweist, welche Schallabsorberausnehmungen (4) sich jeweils lediglich über einen Teil einer Dicke (5) der Kunststoffschaumplatte (2) erstrecken, wobei eine vorgebbare Mehrzahl, insbesondere sämtliche, der Schallabsorberausnehmungen (4) jeweils in Form einer Nut (6) ausgebildet sind, **dadurch gekennzeichnet, dass** die erste Oberfläche (3) der Kunststoffschaumplatte (2) eine Oberfläche des Schallabsorbers (1) bildet, so dass die Verkehrswegelärmschutzwand mit der ersten Oberfläche (3) dem Verkehrsweg zugewandt aufstellbar ist.

2. Verkehrswegelärmschutzwand nach Anspruch 1, **dadurch gekennzeichnet, dass** die Nut (6) eine Breite (8) von wenigstens 1 mm, insbesondere wenigstens 2 mm, aufweist.

3. Verkehrswegelärmschutzwand nach einem der Ansprüche 1 bis 2, **dadurch gekennzeichnet, dass** die Schallabsorberausnehmungen (4) Seitenwände (10) aufweisen, welche im Wesentlichen normal auf die erste Oberfläche (3) angeordnet sind.

4. Verkehrswegelärmschutzwand nach einem der Ansprüche 1 bis 3, **dadurch gekennzeichnet, dass** die Schallabsorberausnehmungen (4) eine Tiefe (7) von wenigsten 30%, insbesondere wenigstens 50%, der Dicke (5) der Kunststoffschaumplatte (2) aufweisen.

5. Verkehrswegelärmschutzwand nach einem der Ansprüche 1 bis 4, **dadurch gekennzeichnet, dass** eine erste Gruppe von Schallabsorberausnehmungen (4) eine erste Tiefe (7) aufweist, dass eine zweite erste Gruppe von Schallabsorberausnehmungen (4) eine zweite Tiefe (7) aufweist, und dass die erste Tiefe (7) unterschiedlich zur zweiten Tiefe (7) ist.

6. Verkehrswegelärmschutzwand nach Anspruch 5, **dadurch gekennzeichnet, dass** entlang eines vorgebbaren Querschnitts durch die Kunststoffschaumplatte (2) abwechselnd Schallabsorberausnehmungen (4) der ersten Gruppe und der zweiten Gruppe angeordnet sind.

7. Verkehrswegelärmschutzwand nach einem der Ansprüche 5 + bis 6, **dadurch gekennzeichnet, dass** eine dritte Gruppe von Schallabsorberausnehmungen (4) in einem ersten Abstand zueinander angeordnet sind, dass eine vierte Gruppe von Schallabsorberausnehmungen (4) in einem zweiten Abstand zueinander angeordnet sind, und dass der erste Abstand unterschiedlich zum zweiten Abstand ist.

8. Verkehrswegelärmschutzwand nach einem der Ansprüche 1 bis 7, **dadurch gekennzeichnet, dass** die Kunststoffschaumplatte (2) Poren (11) aufweist, und dass eine Mehrzahl der Poren (11) geschlossen sind.

9. Verkehrswegelärmschutzwand nach Anspruch 8, **dadurch gekennzeichnet, dass** durch jede der Schallabsorberausnehmungen (4) jeweils eine Mehrzahl an Poren (11) geöffnet und mit der ersten Oberfläche (3) verbunden sind.

10. Verkehrswegelärmschutzwand nach Anspruch 8 oder 9, **dadurch gekennzeichnet, dass** die Poren (11) eine mittlere Porengröße größer 2 mm aufweisen.

11. Verkehrswegelärmschutzwand nach einem der Ansprüche 1 bis 10, **dadurch gekennzeichnet, dass** die Kunststoffschaumplatte (2) eine Dichte zwischen 15 kg/m³ und 50 kg/m³ aufweist.

12. Verkehrswegelärmschutzwand nach einem der Ansprüche 1 bis 11, **dadurch gekennzeichnet, dass** die Kunststoffschaumplatte (2) als Verbundplatte umfassend eine vorgebbare Anzahl individueller Kunststoffschaumteilplatten (12, 13) ausgebildet ist, und dass sich die Schallabsorberausnehmungen (4) über wenigstens zwei der Kunststoffschaumteilplatten (12, 13) erstrecken.

13. Verkehrswegelärmschutzwand nach Anspruch 12, **dadurch gekennzeichnet, dass** eine erste Kunststoffschaumteilplatte (12) eine erste Porengröße aufweist, dass eine zweite Kunststoffschaumteilplatten (13) eine zweite Porengröße aufweist, und dass die erste Porengröße unterschiedlich zur zweiten Porengröße ist.

## Claims

1. Traffic route noise protection wall to be erected at a traffic route outdoors, in particular for placement on a road, a railway track and/or a runway, wherein the traffic noise protection wall comprises at least one panel (14), wherein the panel (14) comprises at least one sound absorber (1), wherein the sound absorber (1) comprises at least one plastic foam board (2), wherein a first surface (3) of the plastic foam board (2) comprises sound absorber recesses (4) for predetermining an absorption behavior with predeterminable frequency response, wherein the sound absorber recesses (4) extend only over a part of a thickness (5) of the plastic foam board (2), wherein a predeterminable plurality, in particular all, of the sound absorber recesses (4) are each made in the form of a groove (6), **characterized in that** the first surface of the plastic foam board (2) forms a surface of the sound absorber (1) so that the traffic route noise protection wall can be erected with the first surface facing the traffic route.

2. Traffic route noise protection wall according to claim 1, **characterized in that** the groove (6) has a width (8) of at least 1 mm, in particular at least 2 mm.

3. Traffic route noise protection wall according to any of the claims 1 to 2, **characterized in that** the sound absorber recesses (4) comprise side walls (10) which are arranged substantially normal to the first surface (3).

4. Traffic route noise protection wall according to any of the claims 1 to 3, **characterized in that** the sound absorber recesses (4) have a depth (7) of at least 30%, in particular of at least 50%, of the thickness (5) of the plastic foam board (2).

5. Traffic route noise protection wall according to any of the claims 1 to 4, **characterized in that** a first group of sound absorber recesses (4) has a first depth (7), that a second first group of sound absorber recesses (4) has a second depth (7), and that the first depth (7) is different from the second depth (7).

6. Traffic route noise protection wall according to claim 5, **characterized in that** sound absorber recesses (4) of the first group and of the second group are arranged alternately along a predeterminable cross-section of the plastic foam board (2).

7. Traffic route noise protection wall according to any of the claims 5 to 6, **characterized in that** a third group of sound absorber recesses (4) are arranged at a first distance from one another, that a fourth group of sound absorber recesses (4) are arranged at a second distance from one another, and that the first distance is different from the second distance.

8. Traffic route noise protection wall according to any of the claims 1 to 10, **characterized in that** the plastic foam board (2) has pores (11), and that a majority of the pores (11) are closed.

9. Traffic route noise protection wall according to claim 8, **characterized in that** a plurality of pores (11) are opened and connected to the first surface (3) by each of the sound absorber recesses (4).

10. Traffic route noise protection wall according to claim 8 or 9, **characterized in that** the pores (11) have an average pore size greater than 2 mm.

11. Traffic route noise protection wall according to any of the claims 1 to 10, **characterized in that** the plastic foam board (2) has a density between 15 kg/m³ and 50 kg/m³.

12. Traffic route noise protection wall according to any of the claims 1 to 11, **characterized in that** the plastic foam board (2) is formed as a composite board comprising a predeterminable number of individual plastic foam part boards (12, 13), and that the sound absorber recesses (4) extend over at least two of the plastic foam part boards (12, 13).

13. Traffic route noise protection wall according to claim 12, **characterized in that** the first plastic foam part board (12) has a first pore size, that a second plastic foam part board (13) has a second pore size, and that the first pore size is different from the second pore size.

## Revendications

1. Mur antibruit destiné à être installé le long d'une voie de circulation à l'extérieur, en particulier le long d'une route, d'une voie ferrée et/ou d'une piste d'atterrissage, le mur antibruit comprenant au moins un panneau (14), le panneau comportant au moins un absorbeur acoustique (1) qui comprend au moins une plaque en mousse plastique (2), une première surface (3) de la plaque en mousse plastique (2) présentant des évidements d'absorption acoustique (4) pour prédéfinir un comportement d'absorption avec une réponse en fréquence prédéfinissable, lesquels évidements d'absorption acoustique (4) s'étendant chacun uniquement sur une partie de l'épaisseur (5) de la plaque en mousse plastique (2), une pluralité prédéfinissable, en particulier la totalité, des évidements d'absorption acoustique (4) étant chacun réalisés sous la forme d'une rainure (6), **caractérisé en ce que** la première surface (3) de la plaque en mousse plastique (2) forme une surface de l'absorbeur acoustique (1), de sorte que le mur antibruit pour voies de circulation peut être installée avec la première surface (3) tournée vers la voie de circulation.

2. Mur antibruit pour voies de circulation selon la revendication 1, **caractérisé en ce que** la rainure (6) présente une largeur (8) d'au moins 1 mm, en particulier d'au moins 2 mm.

3. Mur antibruit pour voies de circulation selon l'une des revendications 1 à 2, **caractérisé en ce que** les évidements pour absorption acoustique (4) présentent des parois latérales (10) qui sont agencées essentiellement perpendiculairement à la première surface (3).

4. Mur antibruit pour voies de circulation selon l'une des revendications 1 à 3, **caractérisé en ce que** les évidements pour absorption acoustique (4) présentent une profondeur (7) d'au moins 30 %, en particulier d'au moins 50 %, de l'épaisseur (5) de la plaque en mousse plastique (2).

5. Mur antibruit pour voies de circulation selon l'une des revendications 1 à 4, **caractérisé en ce qu'**un premier groupe d'évidements d'absorption acoustique (4) présente une première profondeur (7),
qu'un deuxième premier groupe d'évidements d'absorption acoustique (4) présente une deuxième profondeur (7) et que la première profondeur (7) est différente de la deuxième profondeur (7).

6. Mur antibruit pour voies de circulation selon la revendication 5, **caractérisé en ce que** des évidements d'absorption acoustique (4) du premier groupe et du deuxième groupe sont agencés en alternance le long d'une section transversale prédéfinie à travers la plaque en mousse plastique (2).

7. Mur antibruit pour voies de circulation selon l'une des revendications 5 à 6, **caractérisé en ce**
**qu'**un troisième groupe d'évidements d'absorption acoustique (4) sont agencés à une première distance les uns des autres, qu'un quatrième groupe d'évidements d'absorption acoustique (4) sont agencés à une deuxième distance les uns des autres, et que la première distance est différente de la deuxième distance.

8. Mur antibruit pour voies de circulation selon l'une des revendications 1 à 7, **caractérisé en ce que** la plaque en mousse plastique (2) présente des pores (11) et **en ce qu'**une pluralité des pores (11) sont fermés.

9. Mur antibruit pour voies de circulation selon la revendication 8, **caractérisé en ce qu'**une pluralité de pores (11) est ouverte et reliée à la première surface (3) par chaque évidement d'absorption acoustique (4).

10. Mur antibruit pour voies de circulation selon la revendication 8 ou 9, **caractérisé en ce que** les pores (11) ont une taille moyenne supérieure à 2 mm.

11. Mur antibruit pour voies de circulation selon l'une des revendications 1 à 10, **caractérisé en ce que** la plaque en mousse plastique (2) présente une densité comprise entre 15 kg/m3 et 50 kg/m3.

12. Mur antibruit pour voies de circulation selon l'une des revendications 1 à 11, **caractérisée en ce que** la plaque en mousse plastique (2) est conçue comme une plaque composite comprenant un nombre prédéterminé de plaques individuelles en mousse plastique (12, 13) et **en ce que** les évidements d'absorption acoustique (4) s'étendent sur au moins deux des plaques en mousse plastique (12, 13).

13. Mur antibruit pour voies de circulation selon la revendication 12, **caractérisé en ce qu'**une première plaque partielle en mousse plastique (12) présente une première taille de pores, qu'une deuxième plaque partielle en mousse plastique (13) présente une deuxième taille de pores, et que la première taille de pores est différente de la deuxième taille de pores.
